# EUROPEAN PATENT APPLICATION

(11) **EP 4 706 960 A1**
(43) Date of publication of application: **11.03.2026**
(21) Application number: 24807239.9
(22) Date of filing: 15.05.2024
(51) Int. Cl.: B32B 27/18, B32B 9/00, B32B 27/32, B65D 30/02, B65D 65/40

(54) **GAS BARRIER FILM, LAMINATE, AND PACKAGING BAG**

(30) Priority: 18.05.2023 JP 2023082102; 19.12.2023 JP 2023214215
(71) Applicant: Toppan Holdings Inc., Tokyo 110-0016 (JP)
(72) Inventor: HOSHI, Sayaka, Tokyo 110-0016 (JP)
(74) Representative: Wagner & Geyer
(86) International application number: PCT/JP2024/017992
(87) International publication number: WO 2024/237288

(57) **Abstract**

A gas barrier film according to one aspect of the present disclosure includes a base material film containing polypropylene, and a vapor-deposited layer containing an inorganic oxide disposed on a first surface being one surface of the base material film, in which the base material film includes a second skin layer having a second surface being a surface opposite to the first surface of the base material film, and a core layer, and the second skin layer contains silicon-containing particles in a proportion of 1500 mass ppm or more and 4000 mass ppm or less.

## Description

### Technical Field

The present disclosure relates to a gas barrier film, a laminate, and a packaging bag.

### Background Art

A packaging material such as a packaging bag used for packaging foods, beverages, pharmaceuticals, and the like is required to have a gas barrier property for preventing ingress of a gas such as oxygen that alters the contents in order to suppress alteration, spoilage, or the like of the contents and maintain their functions and quality. Therefore, conventionally, a film having a gas barrier property (gas barrier film) is used for these packaging materials.

As such a gas barrier film, for example, a gas barrier film is known which includes a base material containing a thermoplastic resin, a metal oxide layer, and a gas barrier coating layer in this order, and on the surface of the gas barrier coating layer, the ratio of silicon atoms to carbon atoms (Si/C) measured by X-ray photoelectron spectroscopy is more than 0 and less than 0.50 (see Patent Literature 1 below).

### Citation List

### Patent Literature

Patent Literature 1: Japanese Unexamined Patent Publication No. 2023-50299

### Summary of Invention

### Technical Problem

However, in the gas barrier film described in Patent Literature 1, when the contents are stored in the packaging bag and subjected to a retort treatment, the flavor of the contents may deteriorate, and there is room for improvement in that respect.

The present disclosure has been made in view of the above problem, and an object of the present disclosure is to provide a gas barrier film capable of suppressing deterioration in flavor of the contents after a retort treatment and having a good oxygen barrier property even after a retort treatment, and a laminate and a packaging bag using the gas barrier film.

### Solution to Problem

In order to solve the above problems, the present disclosure provides the following gas barrier film, laminate, and packaging bag.
[1] A gas barrier film including a base material film containing polypropylene, and a vapor-deposited layer containing an inorganic oxide disposed on a first surface being one surface of the base material film, in which the base material film includes a second skin layer having a second surface being a surface opposite to the first surface of the base material film, and a core layer, and the second skin layer contains silicon-containing particles in a proportion of 1500 mass ppm or more and 4000 mass ppm or less.
[2] The gas barrier film according to [1], in which the second skin layer further contains an anti-blocking agent other than the silicon-containing particles.
[3] The gas barrier film according to [1] or [2], in which the silicon-containing particles have an average particle diameter of 1 µm or more and 6 µm or less.
[4] The gas barrier film according to any one of [1] to [3], in which the base material film includes a first skin layer having the first surface.
[5] The gas barrier film according to [4], in which the first skin layer contains a copolymer of propylene and an α-olefin, and the first surface of the base material film has an arithmetic average height Sal of 30 nm or more and 80 nm or less, and the second surface has an arithmetic average height Sa2 of 40 nm or more and 120 nm or less.
[6] The gas barrier film according to [5], in which a value of Sa1 + Sa2 is 80 nm or more and 150 nm or less.
[7] The gas barrier film according to [5] or [6], in which the first skin layer contains an anti-blocking agent.
[8] The gas barrier film according to any one of [1] to [7], in which the vapor-deposited layer contains aluminum oxide or silicon oxide.
[9] The gas barrier film according to any one of [1] to [8], further including a gas barrier coating layer disposed on a surface of the vapor-deposited layer opposite to the base material film.
[10] The gas barrier film according to any one of [1] to [9], further including an anchor coat layer disposed between the base material film and the vapor-deposited layer.
[11] A laminate including the gas barrier film according to any one of [1] to [10], and a sealant layer disposed on the second skin layer side of the gas barrier film.
[12] The laminate according to [11], further including a resin film containing polypropylene disposed on a side opposite to the sealant layer of the gas barrier film.
[13] A packaging bag obtained by forming the laminate according to [11] or [12] into a bag.

### Advantageous Effects of Invention

According to the present disclosure, it is possible to provide a gas barrier film capable of suppressing deterioration in flavor of the contents after a retort treatment and having a good oxygen barrier property even after a retort treatment, and a laminate and a packaging bag using the gas barrier film.

### Brief Description of Drawings

FIG. 1 is a schematic cross-sectional view illustrating a base material film according to an embodiment of the present disclosure.
FIG. 2 is a schematic cross-sectional view illustrating a gas barrier film according to an embodiment of the present disclosure.
FIG. 3 is a schematic cross-sectional view illustrating a laminate according to an embodiment of the present disclosure.
FIG. 4 is a schematic cross-sectional view illustrating a laminate according to an embodiment of the present disclosure.

### Description of Embodiments

Hereinafter, embodiments of the present disclosure will be described in detail with reference to the drawings as the case may be. However, the present disclosure is not limited to the following embodiments.

### <Base Material Film>

The base material film is a film (base film) serving as a support in a gas barrier film, and contains polypropylene. In the base material film, a vapor-deposited layer containing an inorganic oxide is formed on a first surface which is one surface of the base material film. The base material film includes a second skin layer having a second surface which is a surface opposite to the first surface, and a core layer, and the second skin layer contains silicon-containing particles in a proportion of 1500 mass ppm or more and 4000 mass ppm or less. The base material film may further include a first skin layer having the first surface.

When the gas barrier film in which the vapor-deposited layer is formed on the first surface of the base material film includes the second skin layer satisfying the conditions described above, it is possible to suppress deterioration in flavor of the contents after a retort treatment and to have a good oxygen barrier property even after a retort treatment.

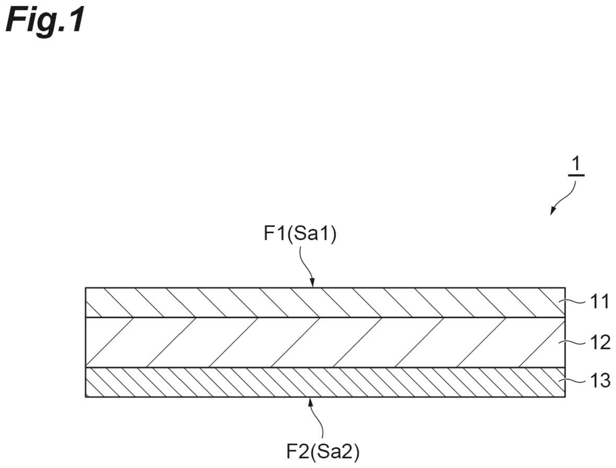

FIG. 1 is a schematic cross-sectional view illustrating a base material film according to an embodiment. The base material film shown in FIG. 1 has a three-layer structure of a first skin layer 11 having a first surface F1, a core layer 12, and a second skin layer 13 having a second surface F2. The base material film may have a two-layer structure of the second skin layer 13 and the core layer 12, or may have a multilayer structure of four or more layers further including another layer other than the first skin layer 11, the core layer 12, and the second skin layer 13.

### (Second Skin Layer)

The second skin layer 13 contains silicon-containing particles. Examples of the silicon-containing particles include silica particles and silicate particles. Examples of the silicate particles include aluminum silicate and calcium silicate. The silicon-containing particles may be an anti-blocking agent. The shape of the silicon-containing particle is not particularly limited, but is preferably spherical or substantially spherical from the viewpoint that scratches are less likely to occur in the first skin layer 11 that comes in contact with the silicon-containing particle when it is in a roll form. As the silicon-containing particles, one type may be used alone or two or more types may be used in combination.

The second skin layer 13 preferably contains polypropylene. The second skin layer 13 may contain homopolypropylene, or may contain a copolymer of propylene and another monomer.

As another monomer used for the copolymer, for example, an α-olefin such as ethylene, 1-butene, or 1-hexene may be used. The second skin layer 13 may contain a copolymer of propylene and an α-olefin. The copolymer may be a random copolymer. The melting point of a resin used for the second skin layer 13 may be 130 to 150°C.

The content of the propylene unit in the copolymer, with respect to the total amount of monomer units, may be 80 mol% or more, 90 mol% or more, 95 mol% or more, or 96 mol% or more; meanwhile may be 99.7 mol% or less, 99.5 mol% or less, 99 mol% or less, or 98 mol% or less.

The polypropylene used for the second skin layer 13 may be a resin polymerized from fossil fuel, may be a recycled resin, or may be a resin obtained by polymerizing a raw material derived from biomass such as plant. When these resins are used, they may be used alone, or a resin polymerized from fossil fuel and a recycled resin or a resin obtained by polymerizing a raw material derived from biomass such as plant may be mixed and used.

The second skin layer 13 contains the silicon-containing particles in a proportion of 1500 to 4000 mass ppm. When the content of the silicon-containing particles in the second skin layer 13 is 1500 mass ppm or more, a good anti-blocking effect and a good odor adsorption effect by the silicon-containing particles can be obtained. As a result, even when the contents are stored in a packaging bag and subjected to a retort treatment, it is possible to suppress the deterioration in flavor of the contents. On the other hand, when the content of the silicon-containing particles in the second skin layer 13 is 4000 mass ppm or less, it is possible to suppress falling off of the silicon-containing particles or occurrence of scratches due to the silicon-containing particles at the time of producing the gas barrier film. Accordingly, deterioration of the oxygen barrier property of the gas barrier film can be suppressed, and the gas barrier film can have a good oxygen barrier property even after a retort treatment. From the viewpoint of more sufficiently obtaining the above effect, the content of the silicon-containing particles in the second skin layer 13 is preferably 1500 to 3500 mass ppm, and more preferably 2000 to 3500 mass ppm.

The average particle diameter of the silicon-containing particles is preferably 1 to 6 µm. In the present description, the average particle diameter is a weight average diameter measured by a coal tar method. When the average particle diameter of the silicon-containing particles is 1 µm or more, a good anti-blocking effect and a good odor adsorption effect of the silicon-containing particles can be obtained. As a result, even when the contents are stored in a packaging bag and subjected to a retort treatment, it is possible to suppress the deterioration in flavor of the contents. On the other hand, when the average particle diameter of the silicon-containing particles is 6 µm or less, it is possible to suppress falling off of the silicon-containing particles or occurrence of scratches due to the silicon-containing particles at the time of producing the gas barrier film. Accordingly, deterioration of the oxygen barrier property of the gas barrier film can be suppressed, and the gas barrier film can have a good oxygen barrier property even after a retort treatment. From the viewpoint of more sufficiently obtaining the above effect, the average particle diameter of the silicon-containing particles is more preferably 2 to 5 µm.

The second skin layer 13 may contain another anti-blocking agent (hereinafter, also referred to as "AB agent") other than the silicon-containing particles. The other AB agent may be organic particles or inorganic particles. Examples of the organic particles include acrylic resin particles, polymethyl methacrylate particles, polystyrene particles, and polyamide particles. Among them, acrylic resin particles or polymethyl methacrylate particles are preferably used from the viewpoint that the particles cause fewer scratches on the resin surface layer. Among these AB agents, any one type may be used alone or two or more types may be used in combination.

The average particle diameter of the organic particles is preferably 1 to 6 µm. When the average particle diameter of the organic particles is 1 µm or more, a good anti-blocking effect of the organic particles can be obtained. On the other hand, when the average particle diameter of the organic particles is 6 µm or less, it is possible to suppress falling off of the organic particles or occurrence of scratches due to the organic particles at the time of producing the gas barrier film. Accordingly, deterioration of the oxygen barrier property of the gas barrier film can be suppressed, and the gas barrier film can have a good oxygen barrier property even after a retort treatment. From the viewpoint of more sufficiently obtaining the above effect, the average particle diameter of the organic particles is more preferably 2 to 5 µm.

When the second skin layer 13 contains another AB agent, the content thereof is preferably such an amount that the total content of the silicon-containing particles and the other AB agent becomes 2000 to 4500 mass ppm, 2000 to 4000 mass ppm, or 2500 to 4000 mass ppm. When the content of the other AB agent is within the above range, the anti-blocking performance can be further improved without impairing the effect of the present disclosure.

The second skin layer 13 may contain, for example, an antioxidant, a stabilizer, a lubricant, an antistatic agent, or the like.

The thickness of the second skin layer 13 is preferably 0.1 to 2.0 µm, and more preferably 0.3 to 1.5 µm from the viewpoint of enabling uniform film formation.

### (First Skin Layer)

The first skin layer 11 preferably contains polypropylene. The first skin layer 11 may contain homopolypropylene, or may contain a copolymer of propylene and another monomer. As the polypropylene, a similar one to that used for the second skin layer 13 can be used. When the base material film 1 includes the first skin layer 11, stress applied to the vapor-deposited layer due to shrinkage of the base material film 1 after heat sterilization can be relaxed, and breakage of the vapor-deposited layer can be suppressed.

The first skin layer 11 may contain a copolymer of propylene and an α-olefin. As a result, adhesion between the first skin layer 11 and the core layer 12 and adhesion between the first skin layer 11 and the vapor-deposited layer are improved. Examples of the α-olefin include ethylene, 1-butene, and 1-hexene. As the α-olefin, one type may be used alone or two or more types may be used in combination. The copolymer may be a random copolymer. The melting point of a resin used for the first skin layer 11 may be 130 to 150°C.

The polypropylene used for the first skin layer 11 may be a resin polymerized from fossil fuel, may be a recycled resin, or may be a resin obtained by polymerizing a raw material derived from biomass such as plant. When these resins are used, they may be used alone, or a resin polymerized from fossil fuel and a recycled resin or a resin obtained by polymerizing a raw material derived from biomass such as plant may be mixed and used.

The first skin layer 11 may or may not contain the AB agent. When an outer layer film such as a second base material film described later is laminated on the first skin layer 11 side of the gas barrier film, since the first skin layer 11 contains the AB agent, adhesion between the gas barrier film and the outer layer film can be improved. The AB agent may be silicon-containing particles, or another AB agent other than the silicon-containing particles. The other AB agent may be organic particles or inorganic particles. Examples of the organic particles include acrylic resin particles, polymethyl methacrylate particles, polystyrene particles, and polyamide particles. Among them, acrylic resin particles or polymethyl methacrylate particles are preferably used from the viewpoint that the particles cause fewer scratches on the resin surface layer. Among these AB agents, any one type may be used alone or two or more types may be used in combination.

When the AB agent is silicon-containing particles, the average particle diameter thereof may be similar to the average particle diameter of the silicon-containing particles used for the second skin layer 13 from a similar viewpoint to that of the second skin layer 13. When the AB agent is organic particles, the average particle diameter thereof may be similar to the average particle diameter of the organic particles used for the second skin layer 13 from a similar viewpoint to that of the second skin layer 13.

The content of the AB agent in the first skin layer 11 may be 1500 mass ppm or less, or 1000 mass ppm or less because a good gas barrier property can be obtained. The content of the AB agent in the first skin layer 11 may be 100 mass ppm or more, 200 mass ppm or more, or 250 mass ppm or more from the viewpoint of preventing blocking during formation of the vapor-deposited layer. That is, the content of the AB agent in the first skin layer 11 may be 100 to 1500 mass ppm, 200 to 1500 mass ppm, or 250 to 1000 mass ppm.

From the viewpoint of more sufficiently obtaining the effect of the present disclosure, the content of the anti-blocking agent in the second skin layer 13 may be 1.0 times or more, or 1.2 times or more the content of the anti-blocking agent in the first skin layer 11.

The first skin layer 11 may contain, for example, an antioxidant, a stabilizer, a lubricant, an antistatic agent, or the like.

The thickness of the first skin layer 11 is preferably 0.1 to 2.0 µm, and more preferably 0.3 to 1.5 µm from the viewpoint of enabling uniform film formation.

### (Core Layer)

The core layer 12 preferably contains polypropylene. From the viewpoint of enhancing the heat resistance of the base material film 1, polypropylene used for the core layer 12 may be crystalline polypropylene, and from the viewpoint of further improving the heat resistance for a heat sterilization treatment, polypropylene may be homopolypropylene which is a homopolymer of propylene. However, a random copolymer of propylene and an α-olefin, a mixture of the copolymer and homopolypropylene, or the like may be used as long as the effect of the present disclosure is not significantly impaired.

The polypropylene used for the core layer 12 may be a resin polymerized from fossil fuel, may be a recycled resin, or may be a resin obtained by polymerizing a raw material derived from plant or other biomass. When these resins are used, they may be used alone, or a resin polymerized from fossil fuel and a recycled resin or a resin obtained by polymerizing a raw material derived from biomass such as plant may be mixed and used.

When the base material film 1 includes the first skin layer 11, the core layer 12 disposed between the first skin layer 11 and the second skin layer 13 may not contain the AB agent.

The thickness of the core layer 12 may be 10 to 200 µm, 12 to 50 µm, or 15 to 30 µm from the viewpoint of ease of handling when forming a packaging bag.

The ratio of the thickness of the first skin layer 11 to the thickness of the core layer 12 (thickness of first skin layer 11/thickness of core layer 12) may be 1/100 to 1/5, or 1/70 to 1/10. When the thickness ratio is within the above range, the heat resistance of the entire base material film 1 can be more sufficiently ensured, and the adhesion between the respective layers in the gas barrier film and the laminate can be further enhanced.

The ratio of the thickness of the second skin layer 13 to the thickness of the core layer 12 (thickness of second skin layer 13/thickness of core layer 12) may be 1/100 to 1/5, or 1/70 to 1/10. When the thickness ratio is within the above range, the heat resistance of the entire base material film 1 can be more sufficiently ensured, and the adhesion between the respective layers in the gas barrier film and the laminate can be further enhanced.

### (Entire Base Material Film)

In the base material film 1, the first skin layer 11 and the second skin layer 13 can be formed on the core layer 12 by, for example, coextruding a material for forming the core layer 12 and a material for forming the first skin layer 11 and the second skin layer 13. After the coextrusion, a film having a multilayer structure may be stretched by an ordinary means to form a uniaxially or biaxially oriented film.

In the base material film 1, the first skin layer 11 is provided on one surface of the core layer 12, and the second skin layer 13 is provided on the other surface. Both surfaces of the base material film 1 may be formed of the first skin layer 11 and the second skin layer 13. Between the core layer 12 and the first skin layer 11, another layer other than these may be provided, but the core layer 12 and the first skin layer 11 may be in contact with each other without interposing another layer. Between the core layer 12 and the second skin layer 13, another layer other than these may be provided, but the core layer 12 and the second skin layer 13 may be in contact with each other without interposing another layer.

The content of polypropylene in the base material film 1 may be 90 mass% or more, 95 mass% or more, or 99 mass% or more with respect to the total mass of the base material film. The content of polypropylene may be substantially 100 mass% (aspect in which the base material film is formed of polypropylene) with respect to the total mass of the base material film.

The thickness (total thickness) of the base material film is not particularly limited, and may be, for example, 10 µm or more and 200 µm or less, 12 µm or more and 50 µm or less, or 15 µm or more and 30 µm or less.

The base material film may be such that the arithmetic average height Sa1 of the surface on the first skin layer side (first surface F1) of the base material film is 30 nm or more and 80 nm or less, and the arithmetic average height Sa2 of the surface on the second skin layer side (second surface F2) is 40 nm or more and 120 nm or less. In addition to satisfying the above conditions, the first skin layer may contain a copolymer of propylene and an α-olefin. It may be that the first skin layer is one outermost surface layer of the base material film and the second skin layer is the other outermost surface layer of the base material film.

Conventionally, a gas barrier film is produced by forming at least a vapor-deposited layer having a gas barrier property on a base material film, but there is a problem that blocking easily occurs when the base material film on which the vapor-deposited layer is formed is wound into a roll shape. Examples of a method for suppressing the occurrence of this blocking include a method using a base material film having irregularities on the surface, but when a heat sterilization treatment such as a retort treatment is applied to a gas barrier film using such a base material film, there is a problem that the gas barrier property easily deteriorates. The gas barrier film is laminated with, for example, another resin film containing polypropylene, such as a sealant layer, and used as a packaging material. Therefore, even when the gas barrier film is laminated with another resin film and then subjected to a heat sterilization treatment such as a retort treatment, the gas barrier film is required to have good adhesion to another resin film.

In order to solve such a problem of the conventional technique, according to the base material film in which the first skin layer contains a copolymer of propylene and an α-olefin and satisfies the conditions of Sa1 and Sa2, the first skin layer containing a copolymer of propylene and an α-olefin and having an arithmetic average height Sa1 of 30 nm or more and 80 nm or less is provided as one outermost surface layer, so that even when a vapor-deposited layer is formed on the first skin layer to produce a gas barrier film, even if the gas barrier film is subjected to a retort treatment, adhesion between the first skin layer and the vapor-deposited layer is good, and occurrence of defects such as cracks in the vapor-deposited layer can be suppressed, so that a good gas barrier property can be obtained. In addition, according to the base material film, the arithmetic average height Sa2 of the surface on the side opposite to the first skin layer (second skin layer side) is 40 nm or more and 120 nm or less, so that occurrence of blocking can be suppressed when the vapor-deposited layer is formed on the first skin layer and then wound into a roll shape. Further, when the arithmetic average heights Sa1 and Sa2 of both surfaces of the base material film are within the above ranges, good adhesion to another resin film can be obtained even when a gas barrier film is produced, and the gas barrier film and another resin film are laminated and then subjected to a retort treatment.

The value of Sa1 may be 30 nm or more and 80 nm or less, but may be 40 nm or more and 80 nm or less from the viewpoint of further improving the gas barrier property and the adhesion to another resin film after a retort treatment and further improving the blocking resistance when a gas barrier film is produced.

The value of Sa2 may be 40 nm or more and 120 nm or less, but may be 45 nm or more and 110 nm or less from the viewpoint of further improving the gas barrier property and the adhesion to another resin film after a retort treatment and further improving the blocking resistance when a gas barrier film is produced.

The total value of Sa1 and Sa2 (Sa1 + Sa2) is not particularly limited, but may be 80 nm or more and 150 nm or less, or 85 nm or more and 145 nm or less from the viewpoint of further improving the gas barrier property and the adhesion to another resin film after a retort treatment and further improving the blocking resistance when the gas barrier film is produced.

Here, the arithmetic average height (Sa) is a parameter indicating the surface roughness of the base material film, and means the average value of the heights of irregularities of the surface of the base material film. The arithmetic average heights Sa1 and Sa2 of both surfaces of the base material film can be measured under the condition of a measurement area of 210 µm square by a three-dimensional non-contact surface shape measuring system.

The arithmetic average heights Sa1 and Sa2 of the base material film can be adjusted by changing the type of resin used for the first skin layer 11 and the second skin layer 13, the blending ratio of resins and the difference in melting point in the case of using a plurality of resins, the addition of the anti-blocking agent and the blending amount thereof, the surface state of the roll at the time of extrusion, the conditions of stretching and the like after film formation, and the like. As the resin to be used, a homopolymer has high crystallinity, and therefore is hard, and is hardly blocked even if smoothness is high, but adhesion tends to be reduced. On the other hand, in the case of a copolymer, since the resin is soft, the adhesion is easily improved, but the copolymer tends to be easily blocked even if the smoothness is low.

### <Gas Barrier Film>

The gas barrier film according to the present embodiment includes the base material film 1 described above and the vapor-deposited layer containing an inorganic oxide disposed on the first surface F1 of the base material film 1. The gas barrier film according to the present embodiment may further include a gas barrier coating layer disposed on a surface of the vapor-deposited layer opposite to the base material film 1.

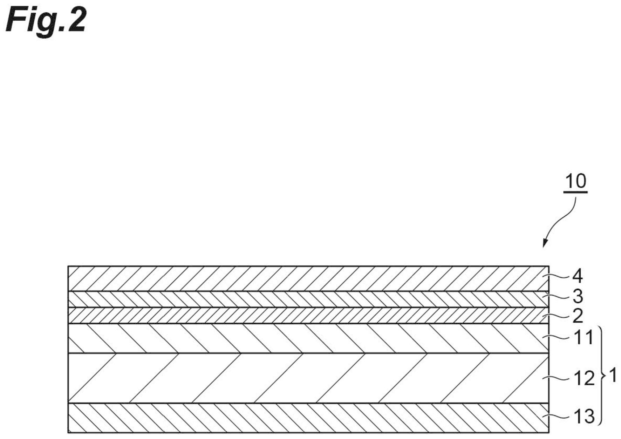

FIG. 2 is a schematic cross-sectional view illustrating the gas barrier film according to an embodiment. As shown in FIG. 2, the gas barrier film 10 according to the present embodiment includes the base material film 1, an anchor coat layer 2, the vapor-deposited layer 3, and a gas barrier coating layer 4 in this order. The anchor coat layer 2 is disposed on a surface of the base material film 1 on the first skin layer 11 side. The gas barrier film may not include the anchor coat layer 2.

### (Anchor Coat Layer)

The anchor coat layer 2 is a layer for further improving adhesion between the base material film 1 and the vapor-deposited layer 3, and is provided between the base material film 1 and the vapor-deposited layer 3. The material constituting the anchor coat layer 2 is not particularly limited as long as it can improve adhesion between the base material film 1 and the vapor-deposited layer 3.

As the material of the anchor coat layer 2, for example, a material containing a reaction product of a polyol compound containing a (meth)acrylic resin and an isocyanate compound can be used. The "(meth)acrylic resin" means at least one of an "acrylic resin" and a "methacrylic resin" corresponding thereto.

Examples of the (meth)acrylic resin include a (meth)acrylic polymer obtained by polymerizing a polymerizable monomer that contains a (meth)acrylic monomer. The (meth)acrylic polymer may be a homopolymer or may be a copolymer with a polymerizable monomer other than the (meth)acrylic monomer. The (meth)acrylic resin may be any resin thermally crosslinkable by urethane curing, epoxy curing or the like. The (meth)acrylic resin may be a polyol having two or more hydroxy groups in one molecule, from the viewpoint of reactivity with an isocyanate compound used as a curing agent described later, and may particularly be a (meth)acrylic polyol.

The (meth)acrylic polyol may be a (meth)acrylic copolymer obtained by copolymerizing a hydrocarbon-based (meth)acrylate and a hydroxy group-containing monomer, or may be a (meth)acrylic copolymer obtained by copolymerizing a hydrocarbon-based (meth)acrylate, a hydroxy group-containing monomer, and a monomer component other than these components (another monomer component). By copolymerizing the above-mentioned monomers, a (meth)acrylic polyol containing a plurality of hydroxy groups can be obtained.

The anchor coat layer 2 may contain a curing agent. The curing agent may be an isocyanate-based compound having two or more NCO groups in the molecule, from the viewpoint of high reactivity with the (meth)acrylic resin.

The isocyanate compound may be a monomeric isocyanate. Examples of the monomeric isocyanate include aromatic or aromatic/aliphatic isocyanates such as tolylene diisocyanate (TDI), diphenylmethane diisocyanate (MDI), xylene diisocyanate (XDI), and tetramethylxylylene diisocyanate (TMXDI); and aliphatic isocyanates such as hexamethylene diisocyanate (HDI), bis(isocyanatomethyl)cyclohexane (H6XDI), isophorone diisocyanate (IPDI), and dicyclohexylmethane diisocyanate (H12MDI).

The isocyanate-based compound may be a polymer or a derivative of the above-mentioned monomeric isocyanate. The isocyanate compound may be, for example, an isocyanate having a structure of a trimeric nurate type, an adduct type reacted with 1,1,1-trimethylolpropane or the like, or a biuret type reacted with biuret. The isocyanate compound may be an isocyanate having an aromatic ring from the viewpoint of excellent reactivity with the (meth)acrylic resin.

If the (meth)acrylic resin is a (meth)acrylic polyol, the content of the isocyanate compound may be such an amount that the number of OH groups in the acrylic polyol is equal to the number of NCO groups in the isocyanate compound.

The anchor coat layer 2 may further contain a silane coupling agent, from the viewpoint of further improving adhesion to the vapor-deposited layer 3. Examples of the silane coupling agent include an epoxy-based silane coupling agent having an epoxy group, such as 3-glycidoxypropyltrimethoxysilane; an amino-based silane coupling agent having an amino group, such as 3-aminopropyltrimethoxysilane; a mercapto-based silane coupling agent having a mercapto group, such as 3-mercaptopropyltrimethoxysilane; and an isocyanate-based silane coupling agent having an NCO group, such as 3-isocyanatepropyltriethoxysilane. One type of these silane coupling agents can be used or two or more types thereof can be used in combination.

In addition, as a material constituting the anchor coat layer 2, a polyurethane resin formed from an acid group-containing polyurethane and a polyamine can also be used. The polyurethane resin is obtainable as a result of binding the acid group in the acid group-containing polyurethane to the amino group in the polyamine as a crosslinking agent. That is, the polyurethane resin can be said to be a reaction product of an acid group-containing polyurethane and a polyamine, or a product formed by crosslinking an acid group-containing polyurethane with a polyamine. The bond between the acid group in the acid group-containing polyurethane and the amino group in the polyamine may be an ionic bond (an ionic bond between a carboxyl group and a tertiary amino group, for example), or may be a covalent bond (an amide bond, for example).

To the polyurethane resin, a silane coupling agent or a carbodiimide compound may be added. By adding such a compound, a crosslinked structure is formed with the polyurethane resin, and the gas barrier property or the adhesion between the base material film 1 and the vapor-deposited layer 3 can be further improved. As the silane coupling agent, a commonly used silane coupling agent can be used, and examples thereof include a compound in which an alkoxy group and an organic reactive group are bonded to a silicon atom.

The thickness of the anchor coat layer 2 is not particularly limited as long as the thickness is enough to improve the adhesion between the base material film 1 and the vapor-deposited layer 3, but is preferably 30 nm or more. In this case, as compared with the case where the thickness of the anchor coat layer 2 is less than 30 nm, the smoothness of the surface of the anchor coat layer 2 can be further improved, and the thickness of the vapor-deposited layer 3 can be made more uniform, and the oxygen barrier property can also be further improved. Hence, the oxygen barrier property of the gas barrier film 10 can be further improved. The thickness of the anchor coat layer 2 is more preferably 40 nm or more, and still more preferably 50 nm or more. By increasing the thickness of the anchor coat layer 2, it is possible to further suppress deterioration of the gas barrier property when an external force such as stretching is applied.

The thickness of the anchor coat layer 2 is preferably 2000 nm (2 µm) or less. In this case, as compared with the case where the thickness of the anchor coat layer 2 exceeds 2000 nm, the flexibility of the gas barrier film 10 is further improved, and the oxygen gas barrier property of the gas barrier film 10 after abuse can be further improved. The thickness of the anchor coat layer 2 is preferably 1500 nm (1.5 µm) or less.

The anchor coat layer 2 may be formed, for example, by applying an anchor coat solution onto the resin layer by a method such as gravure coating, roll coating, or bar coating, followed by drying.

In order to improve adhesion between the base material film 1 and the vapor-deposited layer 3, in place of the anchor coat layer 2, a surface of the base material film 1 on a side where the vapor-deposited layer 3 is to be formed may be subjected to a surface treatment such as a plasma treatment or a corona treatment. In addition, the anchor coat layer 2 may be provided on the surface-treated surface.

### (Vapor-Deposited Layer)

The vapor-deposited layer 3 contains an inorganic oxide. The vapor-deposited layer 3 may be formed directly on the anchor coat layer 2 from the viewpoint of improving the gas barrier property against water vapor, oxygen, and the like. The vapor-deposited layer 3 may have transparency.

As the inorganic oxide, for example, aluminum oxide, silicon oxide, tin oxide, magnesium oxide, and a mixture thereof can be used. The inorganic oxide may be at least one type selected from aluminum oxide and silicon oxide, from the viewpoint of excellence in sterilization resistance.

The thickness of the vapor-deposited layer 3 may be 5 nm or more, 10 nm or more, or 15 nm or more, from the viewpoint of uniformity of film thickness and excellence in the gas barrier property, meanwhile may be 300 nm or less, 150 nm or less, or 100 nm or less, from the viewpoint of making the vapor-deposited layer 3 less likely to crack even under external force applied after the film formation. From these viewpoints, the thickness of the vapor-deposited layer 3 may be 5 to 300 nm, 10 to 150 nm, or 15 to 100 nm.

The vapor-deposited layer 3 can be formed by, for example, a vacuum vapor deposition method, a plasma-assisted deposition method, an ion beam-assisted deposition method, a sputtering method, or a reactive vapor deposition method. The vapor-deposited layer 3 may be formed by a vacuum vapor deposition method from the viewpoint of excellent productivity, may be formed by a plasma-assisted method or an ion beam-assisted method from the viewpoint of excellent adhesion between the vapor-deposited layer 3 and the base material film 1, and from the viewpoint of improving the denseness of the vapor-deposited layer 3, or may be formed by a reactive vapor deposition method in which various gases such as oxygen are blown in from the viewpoint of excellent transparency of a vapor-deposited film.

Examples of the heating means of the vacuum vapor deposition method include an electron beam heating method, a resistance heating method, and an induction heating method. The heating means of the vacuum vapor deposition method may be an electron beam heating method from the viewpoint of being excellent in wide range of selectivity of a material to be evaporated.

### (Gas Barrier Coating Layer)

The gas barrier film 10 may further include a gas barrier coating layer 4 on a side opposite to the anchor coat layer 2 with respect to the vapor-deposited layer 3. When the gas barrier film 10 includes the gas barrier coating layer 4, the vapor-deposited layer 3 can be protected, and the gas barrier property is further improved.

The gas barrier coating layer 4 may contain a silicon compound or a hydrolysate thereof, and a water-soluble polymer having a hydroxy group. The gas barrier coating layer 4 may contain a water-soluble polymer having a hydroxy group and at least one selected from the group consisting of a metal alkoxide, a silane coupling agent, and a hydrolysate thereof.

The silicon compound may be, for example, at least one type selected from Si(OR¹)₄ and R²Si(OR³)₃. Each of OR¹ and OR³ independently represents a hydrolyzable group, and R² represents an organic functional group. R² is exemplified by a vinyl group, an epoxy group, a methacryloxy group, a ureido group, and an isocyanate group. Si(OR¹)₄ may be tetraethoxysilane (Si(OC₂H₅)₄) from the viewpoint that it is relatively stable in an aqueous solvent after hydrolysis.

The water-soluble polymer having a hydroxy group is exemplified by polyvinyl alcohol, polyvinyl pyrrolidone, starch, methyl cellulose, carboxymethyl cellulose, and sodium alginate. The water-soluble polymer having a hydroxy group may be polyvinyl alcohol, from the viewpoint of excellence in the gas barrier property.

Examples of the metal alkoxide include a compound represented by the following General Formula (1).

M(OR¹¹)ₘ(R¹²)ₙ₋ₘ ... (1)

In the formula, R¹¹ and R¹² are each independently a monovalent organic group having 1 to 8 carbon atoms, and preferably an alkyl group such as a methyl group or an ethyl group. M represents an n-valent metal atom such as Si, Ti, Al, or Zr. m is an integer of 1 to n. When a plurality of R¹¹s or R¹²s are present, R¹¹s or R¹²s may be the same or different.

Specific examples of the metal alkoxide include tetraethoxysilane [Si(OC₂H₅)₄] and aluminum triisopropoxide [Al(O-2'-C₃H₇)₃]. Tetraethoxysilane and aluminum triisopropoxide are preferable because they are relatively stable in an aqueous solvent after hydrolysis.

Examples of the silane coupling agent include a compound represented by the following General Formula (2).

Si(OR²¹)ₚ(R²²)₃₋ₚR²³ ... (2)

In the formula, R²¹ represents an alkyl group such as a methyl group or an ethyl group, R²² represents a monovalent organic group such as an alkyl group, an aralkyl group, an aryl group, an alkenyl group, an alkyl group substituted with an acryloxy group, or an alkyl group substituted with a methacryloxy group, R²³ represents a monovalent organic functional group, and p represents an integer of 1 to 3. When a plurality of R²'s or R²²s are present, R²¹s or R²²s may be the same or different. Examples of the monovalent organic functional group represented by R²³ include a glycidyloxy group, an epoxy group, a mercapto group, a hydroxy group, an amino group, an alkyl group substituted with a halogen atom, and a monovalent organic functional group containing an isocyanate group. A compound in which such a silane coupling agent is formed into a multimer such as a dimer or a trimer may be used.

Specific examples of the silane coupling agent include silane coupling agents such as vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, and γ-methacryloxypropylmethyldimethoxysilane.

The gas barrier coating layer 4 may further contain an additive such as an isocyanate compound, a silane coupling agent, a dispersant, a stabilizer, a viscosity modifier, or a colorant.

The gas barrier coating layer 4 may have a thickness of 0.1 µm or more or 0.3 µm or more, or may have a thickness of 5 µm or less or 1 µm or less. The gas barrier coating layer 4 may have a thickness of 0.1 to 5 µm, or 0.3 to 1 µm.

The gas barrier coating layer 4 can be formed, for example, by dissolving a water-soluble polymer in water or a water/alcohol mixed solvent, then mixing a silicon compound or a hydrolysate thereof, a metal alkoxide, a silane coupling agent, or the like, and applying this mixed solution onto a vapor-deposited layer by a method such as gravure coating, roll coating, or bar coating, followed by drying.

When the water-soluble polymer is polyvinyl alcohol, the content of polyvinyl alcohol in the mixed solution, with respect to the total solid content of the mixed solution, may be 20 mass% or more, or 25 mass% or more from the viewpoint of easily forming the gas barrier coating layer, meanwhile may be 50 mass% or less, or 40 mass% or less from the viewpoint of being excellent in the gas barrier property. The content of polyvinyl alcohol in the mixed solution may also be 20 to 50 mass%, or 25 to 40 mass%, with respect to the total solid content of the mixed solution.

### <Laminate>

A laminate according to the present embodiment includes the gas barrier film 10 described above and a sealant layer disposed on the surface of the gas barrier film 10 on the second skin layer 13 side. The laminate according to the present embodiment may further include a second base material film containing polypropylene disposed on a surface of the gas barrier film 10 opposite to the sealant layer.

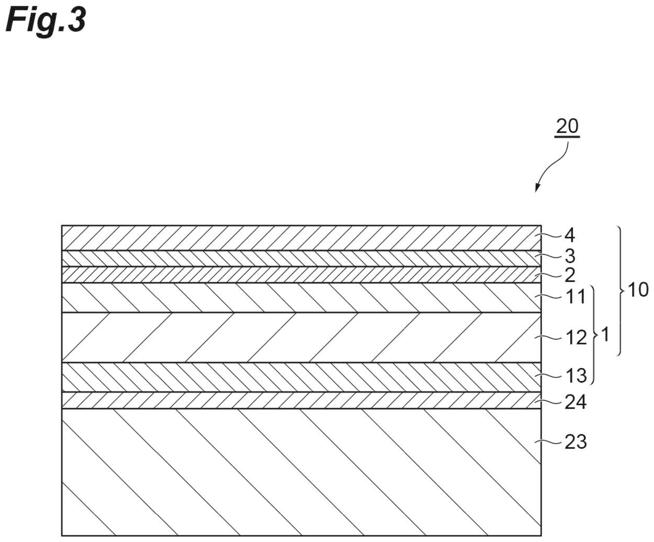

FIG. 3 is a schematic cross-sectional view illustrating a laminate according to an embodiment. A laminate 20 shown in FIG. 3 has a structure in which a sealant layer 23 is laminated on a second skin layer 13 of the gas barrier film 10 with an adhesive layer 24 interposed therebetween.

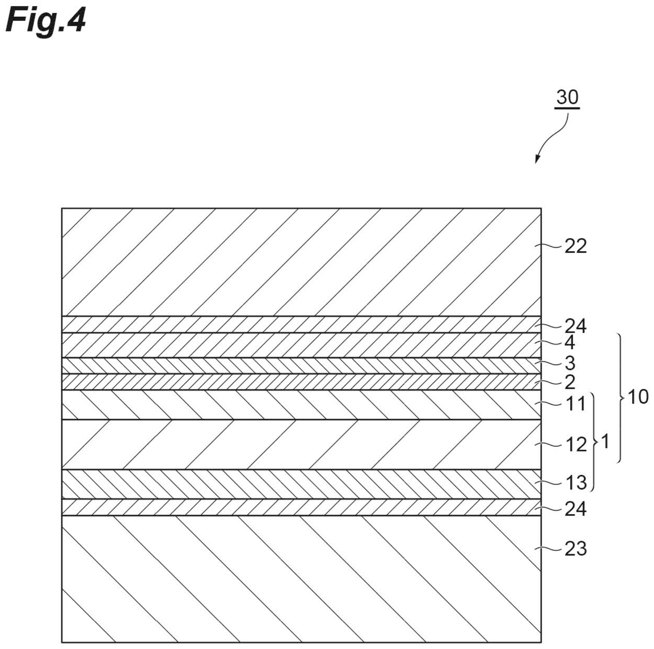

FIG. 4 is a schematic cross-sectional view illustrating a laminate according to another embodiment. A laminate 30 shown in FIG. 4 has a structure in which a sealant layer 23 is laminated on the second skin layer 13 of the gas barrier film 10 with an adhesive layer 24 interposed therebetween, and a resin film 22 containing polypropylene as a second base material film is laminated on the gas barrier coating layer 4 of the gas barrier film 10 with an adhesive layer 24 interposed therebetween.

As the sealant layer 23, for example, a stretched or unstretched polypropylene film may be used, or an unstretched polypropylene film may be used. When polypropylene is used as a material of the sealant layer 23, the laminate 20 can be a monomaterial packaging material.

The thickness of the sealant layer 23 is not particularly limited, but may be, for example, 10 µm or more or 20 µm or more, and 200 µm or less or 100 µm or less. The thickness of the sealant layer 23 may be 10 to 200 µm, or 20 to 100 µm.

The adhesive layer 24 bonds the films to each other. Examples of the adhesive constituting the adhesive layer include a polyurethane resin obtained by allowing a di- or higher functional isocyanate compound to act on a main agent such as polyester polyol, polyether polyol, acrylic polyol, or carbonate polyol. Among these types of polyols, one type may be used alone or two or more types may be used in combination.

From the viewpoint of improving adhesiveness, the adhesive layer 24 may contain a carbodiimide compound, an oxazoline compound, an epoxy compound, a phosphorus compound, a silane coupling agent, or the like in the polyurethane resin described above.

The amount of application of the adhesive layer may be, for example, 0.5 to 10 g/m² from the viewpoint of obtaining a desired adhesive strength, shape conformity, workability, and the like. As the adhesive layer, one in which a polymer component is derived from biomass or one having biodegradability may be used from the viewpoint of environmental consideration. An adhesive having a barrier property may be used for the adhesive layer.

When the laminate further includes the resin film 22 as the second base material film, the resin film 22 may be laminated on the gas barrier coating layer 4 of the gas barrier film 10 with the adhesive layer 24 interposed therebetween. As the resin film 22, for example, a film obtained by stretching homopolypropylene for imparting heat resistance may be used.

The thickness of the resin film 22 is not particularly limited, but may be, for example, 3 µm or more and 200 µm or less, or 6 µm or more and 50 µm or less.

### <Packaging Material>

The packaging material can be produced using the laminate described above. In the case of a laminate using the gas barrier film, it is possible to produce a packaging material having sufficiently low oxygen permeability and excellent laminate strength even after a heat sterilization treatment such as a retort treatment. In the case of a laminate using the gas barrier film, it is possible to produce a packaging material capable of suppressing deterioration in flavor of the contents even after a heat sterilization treatment such as a retort treatment. Therefore, the packaging material produced from such a laminate can store foods, beverages, pharmaceuticals, and the like, and is particularly suitable for storing foods and beverages. The laminate may be formed into a bagshaped packaging material (packaging bag) by folding one laminate in two such that the sealant layers face each other and then heat-sealing three sides other than the folded portion, or may be formed into a bagshaped packaging material (packaging bag) by stacking two laminates such that the sealant layers face each other and then heat-sealing four sides.

The packaging material may be provided with an opening plug. In the packaging material with an opening plug, the opening plug may be sandwiched and fixed by two laminates forming the packaging material, or the spout may be bonded and fixed by making a hole in one surface of the packaging material. The spout may be provided on an upper surface of the packaging material, or may be provided on a side surface, a bottom surface, or diagonally upward of the packaging material. When the contents are in a liquid or gel form, a straw that reaches the bottom of the packaging material may be provided in addition to the spout plug (so-called spout) so that the contents can be sucked out directly with the mouth.

As another form of the packaging material with an opening plug, a bag-in-box in which a bag (inner bag) storing a liquid such as a soft drink or an alcoholic beverage is housed in a carton (outer box) can be exemplified. That is, the laminate according to the present embodiment can be used for a bag-in-box bag, particularly a bag provided with an opening plug (tube) for spouting.

When the laminate is used as a packaging material with an opening plug, from the viewpoint of improving the recyclability, the opening plug portion and the entire opening plug of a cap may be formed of the same resin as the base material film of the gas barrier film.

### Examples

Hereinafter, the present disclosure will be described in more detail with reference to examples, but the present disclosure is not limited to these examples.

### <Preparation of Anchor Coat Layer-Forming Composition>

An anchor coat layer-forming composition was prepared as follows. In ethyl acetate as a diluent solvent, γ-isocyanate propyltrimethoxysilane and acrylic polyol were added, mixed, and stirred. At this time, the acrylic polyol was added in a proportion of 5 parts by mass with respect to 1 part by mass of γ-isocyanate propyltrimethoxysilane. As the acrylic polyol, GS-5756 (trade name) manufactured by Mitsubishi Rayon Co., Ltd. was used. Then, tolylene diisocyanate (TDI) as an isocyanate compound was added so that the amount of NCO groups was equivalent to that of OH groups of the acrylic polyol. The resulting mixed solution was diluted with the diluent solvent to obtain an anchor coat layer-forming composition having a solid content concentration of 2 mass%.

### <Preparation of Gas Barrier Coating Layer- Forming Composition>

The following raw material liquid A, raw material liquid B, and raw material liquid C were mixed at a mass ratio of 0.5 : 0.4 : 0.1 to prepare a gas barrier coating layer-forming composition.

### (Raw Material Liquid A)

Polyvinyl alcohol (trade name "Kuraray Poval 60-98", manufactured by Kuraray Co., Ltd.) was dissolved in water so that the solid content ratio was 5 mass%.

### (Raw Material Liquid B)

Tetraethoxysilane (trade name "KBE04", solid content: 100 mass%, manufactured by Shin-Etsu Chemical Co., Ltd., hereinafter also referred to as "TEOS") as a metal alkoxide, methanol (manufactured by Kanto Chemical Co., Inc.), and 0.1 N hydrochloric acid (manufactured by Kanto Chemical Co., Inc.) were mixed at a mass ratio of 17/10/73, and dissolved so that the solid content ratio was 5 mass%.

### (Raw Material Liquid C)

1,3,5-Tris(3-methoxysilylpropyl)isocyanurate as a silane coupling agent was added to a mixed solvent of water/isopropyl alcohol = 1/1 (mass ratio), and dissolved so that the solid content ratio was 5 mass%.

### <Example 1>

### (Production of Base Material Film)

First, a multilayer film having a thickness of 1000 µm and having a three-layer structure of a first skin layer/a core layer/a second skin layer was produced by melt-extruding a material of each layer with a screw extruder. At this time, homopolypropylene was used as the material of the core layer, and an ethylene-propylene random copolymer (hereinafter referred to as "copolymerized PP (1)") having a melting point of 132°C was used as the material of the first skin layer and the second skin layer. Synthetic silica particles (average particle diameter: 5 µm) as an anti-blocking agent (AB agent) were added to the second skin layer so as to have the content shown in Table 1.

Next, the multilayer film was stretched 5 times in the machine direction (MD) and 10 times in the transverse direction (TD) using a tenter, and the surface on the first skin layer side was subjected to a corona treatment to obtain a simultaneously biaxially stretched polypropylene (PP) film having a thickness of 20 µm as a base material film. The machine direction is a direction of melt extrusion, and the transverse direction is a direction orthogonal to the direction of melt extrusion. In the base material film, the thickness of the first skin layer was 1 µm, the thickness of the core layer was 18 µm, and the thickness of the second skin layer was 1 µm. The surface of the base material film on the first skin layer side is the first surface on which the vapor-deposited layer is formed, and the surface on the second skin layer side is the second surface.

### (Production of Gas Barrier Film)

The anchor coat layer-forming composition prepared as described above was applied onto the first surface of the base material film using a bar coater so that the thickness after drying was 0.2 µm, and dried at 60°C for 1 minute to form an anchor coat layer. Next, an alumina vapor-deposited layer having a thickness of 20 nm was formed on the anchor coat layer using a vacuum vapor deposition apparatus. Subsequently, the gas barrier coating layer-forming composition prepared as described above was applied onto the surface of the vapor-deposited layer using a bar coater so that the thickness after drying was 0.3 µm, and dried in an oven at 50°C for 1 minute to form a gas barrier coating layer. Thus, a gas barrier film was obtained.

### <Example 2>

A gas barrier film was produced in the same manner as in Example 1 except that the average particle diameter of the synthetic silica particles to be added to the second skin layer was changed as shown in Table 1, and polymethyl methacrylate (PMMA) particles (average particle diameter: 2 µm) as an AB agent were further added to the second skin layer so as to have the content shown in Table 1.

### <Example 3>

A gas barrier film was produced in the same manner as in Example 1 except that the content of the synthetic silica particles in the second skin layer was changed as shown in Table 1, and PMMA particles (average particle diameter: 4 µm) as an AB agent were further added to the second skin layer so as to have the content shown in Table 1.

### <Example 4>

A gas barrier film was produced in the same manner as in Example 1 except that an ethylene-1-butene-1-propylene random copolymer (hereinafter referred to as "copolymerized PP (2)") having a melting point of 148°C was used as the material of the first skin layer and the second skin layer.

### <Example 5>

A gas barrier film was produced in the same manner as in Example 1 except that the average particle diameter and the content of the synthetic silica particles in the second skin layer were changed as shown in Table 1.

### <Comparative Example 1>

A gas barrier film was produced in the same manner as in Example 1 except that the content of the synthetic silica particles in the second skin layer was changed as shown in Table 1.

### <Comparative Example 2>

A gas barrier film was produced in the same manner as in Example 1 except that the copolymerized PP (2) was used as the material of the first skin layer and the second skin layer, the average particle diameter and the content of the synthetic silica particles in the second skin layer were changed as shown in Table 1, and PMMA particles (average particle diameter: 4 µm) as an AB agent were further added to the second skin layer so as to have the content shown in Table 1.

### <Comparative Examples 3 to 4>

A gas barrier film was produced in the same manner as in Example 1 except that synthetic silica particles were not added to the second skin layer, and instead, PMMA particles (average particle diameter: 4 µm) were added so as to have the content shown in Table 1.

### <Examples 6 to 10 and Comparative Examples 5 to 8>

Gas barrier films of Examples 6 to 10 and Comparative Examples 5 to 8 were produced in the same manner as in Examples 1 to 5 and Comparative Examples 1 to 4 except that synthetic silica particles (average particle diameter: 2 µm) as an AB agent were added to the first skin layer so as to have the content shown in Table 2.

### <Examples 11 to 15 and Comparative Examples 9 to 12>

Gas barrier films of Examples 11 to 15 and Comparative Examples 9 to 12 were produced in the same manner as in Examples 1 to 5 and Comparative Examples 1 to 4 except that acrylic resin particles (average particle diameter: 2 µm) as an AB agent were added to the first skin layer so as to have the content shown in Table 3.

### <Measurement of Arithmetic Average Height Sa>

The arithmetic average height Sal of the surface on the first skin layer side and the arithmetic average height Sa2 of the surface on the second skin layer side of each of the base material films produced in Examples and Comparative Examples were measured under the condition of a measurement area of 210 µm square using a three-dimensional non-contact surface shape measuring system (VertScan R3300h Lite, manufactured by Ryoka Systems Inc.). The results are shown in Tables 1 to 3.

### [Production of Laminate A]

An unstretched polypropylene film having a thickness of 60 µm as a sealant layer was bonded to a surface (second surface) of the gas barrier film produced in each of Examples and Comparative Examples on a side (second skin layer side) opposite to the gas barrier coating layer by a dry lamination method with a two-liquid curable urethane-based adhesive interposed therebetween to produce a laminate A including a gas barrier coating layer/a vapor-deposited layer/an anchor coat layer/a first skin layer/a core layer/a second skin layer/an adhesive layer/a sealant layer.

### [Production of Laminate B]

A surface (first surface) of each of the gas barrier films produced in Examples and Comparative Examples on the gas barrier coating layer side and a biaxially stretched polypropylene film (OPP) having a thickness of 20 µm as a resin film were bonded to each other by a dry lamination method with a two-liquid curable urethane-based adhesive interposed therebetween. Thereafter, a surface (second surface) of the gas barrier film on the second skin layer side and an unstretched polypropylene film (CPP) having a thickness of 60 µm as a sealant layer were bonded to each other by a dry lamination method with a two-liquid curable urethane-based adhesive interposed therebetween to produce a laminate B including a resin film (OPP)/a gas barrier coating layer/a vapor-deposited layer/an anchor coat layer/a first skin layer/a core layer/a second skin layer/an adhesive layer/a sealant layer (CPP).

### [Evaluation]

### <Blocking Resistance>

In the production of the above gas barrier film, a test piece for evaluation of blocking resistance was obtained by forming the anchor coat layer and the vapor-deposited layer on the first skin layer of the base material film. Two test pieces of this type were prepared and stacked so that the surface of the vapor-deposited layer of one test piece and the surface on a side (second skin layer side) opposite to the vapor-deposited layer of the other test piece faced each other, loaded at a pressure of 1 MPa, and allowed to stand for 24 hours under conditions of 25°C and 65% RH. After standing, the stacked test pieces were cut into a size of a width of 150 mm and a length of 500 mm, and the peel strength between the two test pieces was measured. The peel strength was measured with TENSILON Universal Material Testing Instrument (RTC-1250 manufactured by A&D Co., Ltd.). The peel strength was used as an index of the blocking resistance of the base material film, and was evaluated based on the following evaluation criteria. The results are shown in Tables 1 to 3. When the result is "A", it can be said that the base material film is excellent in blocking resistance.
A: The peel strength is less than 0.5 N/150 mm.
B: The peel strength is 0.5 N/150 mm or more.

### <Production of Packaging Bag>

A sheet of A4 size (size of long side 297 mm × short side 210 mm) was cut out from the laminate A produced above. The sheet was folded in two so that the short sides of both ends overlapped each other, and the overlapping long sides were heat-sealed to produce a packaging bag (pouch) having an opening. Subsequently, 150 g (amino acid content: 700 mg per 100 g) of water-boiled ground chicken as contents was packed in the packaging bag, which was sealed by heat-sealing the opening. The sealed packaging bag was subjected to a retort treatment to obtain a packaging bag after the retort treatment. The retort treatment (retort sterilization) was performed by holding at 120°C for 30 minutes using a hot water storage type retort pot.

### <Measurement of Oxygen Permeability>

The packaging bag after retort sterilization was opened, and a portion (100 mm × 100 mm) of the laminate A was cut out as an evaluation sample. With respect to the cut-out sample, the oxygen permeability (OTR) was measured under the conditions of 30°C and 70% RH using an oxygen permeability measurement apparatus (trade name: OX-TRAN2/20, manufactured by Modern Control, Inc.). This measured value was used as an index of the oxygen barrier property of the laminate A. At this time, the OTR was measured in accordance with JIS K 7126-2. The results of OTR are shown in Tables 1 to 3.

### <Evaluation of Deterioration in Flavor>

The packaging bag after the retort treatment was opened, and the odor (presence or absence of an odor such as a retort odor other than the original smell of the contents) in the packaging bag in a state of containing the contents and the taste of the contents taken out (whether the contents have deteriorated from the original taste) were subjected to sensory evaluation by four panelists according to the following criteria, and an average score was calculated. When the average score was 3.5 or more, it was determined that deterioration in flavor was suppressed. The results are shown in Tables 1 to 3.

### (Odor)

5: There is almost no odor.
4: There is a slight odor, but it is not problematic.
3: The odor is a bit strong and problematic.
2: The odor is strong and problematic.
1: The odor is quite strong and problematic.

### (Taste)

5: There is umami.
4: Umami is slightly reduced, but it is not problematic.
3: There is no umami, and the taste has deteriorated, and it is problematic.
2: The taste has deteriorated, and it is problematic.
1: The taste has deteriorated significantly, and it is problematic.

### <Adhesion Strength after Retort Treatment>

A packaging bag having four sides as sealing portions was produced using the laminate B, and filled with water as the contents. Thereafter, a retort sterilization treatment was performed at 130°C for 30 minutes. The laminate B subjected to the retort sterilization treatment was cut into a size of a width of 150 mm and a length of 500 mm, and the adhesion strength was measured. As the adhesion strength, an adhesion strength between the biaxially stretched polypropylene film (OPP) and the first skin layer and an adhesion strength between the second skin layer and the unstretched polypropylene film (CPP) were measured. The results are shown in Tables 1 to 3.

**[Table 1]**

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Second skin layer | Resin | | Copolymerized PP (1) | Copolymerized PP (1) | Copolymerized PP (1) | Copolymerized PP (2) | Copolymerized PP (1) | Copolymerized PP (1) | Copolymerized PP (2) | Copolymerized PP (1) | Copolymerized PP (1) |
| | AB agent 1 | Type | Silica | Silica | Silica | Silica | Silica | Silica | Silica | PMMA | PMMA |
| | | Average particle diameter: [µm] | 5 | 2 | 5 | 5 | 4 | 5 | 4 | 4 | 4 |
| | | Content [mass ppm] | 3000 | 3000 | 1500 | 3000 | 3500 | 4500 | 500 | 2000 | 3500 |
| | AB agent 2 | Type | - | PMMA | PMMA | - | - | - | PMMA | - | - |
| | | Average particle diameter: [µm] | - | 2 | 4 | - | - | - | 4 | - | - |
| | | Content [mass ppm] | - | 1000 | 2000 | - | - | - | 2000 | - | - |
| Surface roughness [nm] | Sa1 | | 32 | 32 | 32 | 46 | 32 | 32 | 46 | 32 | 32 |
| | Sa2 | | 93 | 75 | 98 | 93 | 85 | 120 | 79 | 73 | 80 |
| | Sa1 + Sa2 | | 125 | 107 | 130 | 139 | 117 | 152 | 125 | 105 | 112 |
| OTR [cm³ / m²/ day / atm] | | | <2 | <2 | <2 | <2 | <2 | 5 | <2 | <2 | <2 |
| Sensory evaluation | Odor | | 4.0 | 4.3 | 3.8 | 4.3 | 4.3 | 4.8 | 2.3 | 1.3 | 1.5 |
| | Taste | | 4.5 | 4.3 | 3.8 | 4.0 | 4.3 | 4.3 | 2.0 | 1.8 | 1.8 |
| Blocking resistance | | | A | A | A | A | A | A | A | B | A |
| Adhesion strength [N/15 mm] | First skin layer/OPP | | >2.0 | >2.0 | >2.0 | >2.0 | >2.0 | >2.0 | >2.0 | >2.0 | >2.0 |
| | Second skin layer/CPP | | >2.0 | >2.0 | >2.0 | >2.0 | >2.0 | >2.0 | >2.0 | >2.0 | >2.0 |

**[Table 2]**

| | | | Example 6 | Example 7 | Example 8 | Example 9 | Example 10 | Comparative Example 5 | Comparative Example 6 | Comparative Example 7 | Comparative Example 8 |
|---|---|---|---|---|---|---|---|---|---|---|---|
| First skin layer | Resin | | Copolymerized PP (1) | Copolymerized PP (1) | Copolymerized PP (1) | Copolymerized PP (2) | Copolymerized PP (1) | Copolymerized PP (1) | Copolymerized PP (2) | Copolymerized PP (1) | Copolymerized PP (1) |
| | AB agent | Type | Silica | Silica | Silica | Silica | Silica | Silica | Silica | Silica | Silica |
| | | Average particle diameter: [µm] | 2 | 2 | 2 | 2 | 2 | 2 | 2 | 2 | 2 |
| | | Content [mass ppm] | 500 | 500 | 500 | 1000 | 1000 | 500 | 1000 | 500 | 1000 |
| Second skin layer | Resin | | Copolymerized PP (1) | Copolymerized PP (1) | Copolymerized PP (1) | Copolymerized PP (2) | Copolymerized PP (1) | Copolymerized PP (1) | Copolymerized PP (2) | Copolymerized PP (1) | Copolymerized PP (1) |
| | AB agent 1 | Type | Silica | Silica | Silica | Silica | Silica | Silica | Silica | PMMA | PMMA |
| | | Average particle diameter: [µm] | 5 | 2 | 5 | 5 | 4 | 5 | 4 | 4 | 4 |
| | | Content [mass ppm] | 3000 | 3000 | 1500 | 3000 | 3500 | 4500 | 500 | 2000 | 3500 |
| | AB agent 2 | Type | - | PMMA | PMMA | - | - | - | PMMA | - | - |
| | | Average particle diameter: [µm] | - | 2 | 4 | - | - | - | 4 | - | - |
| | | Content [mass ppm] | - | 1000 | 2000 | - | - | - | 2000 | - | - |
| Surface roughness [nm] | Sa1 | | 48 | 48 | 48 | 57 | 57 | 48 | 57 | 48 | 57 |
| | Sa2 | | 93 | 75 | 98 | 93 | 85 | 120 | 79 | 73 | 80 |
| | Sa1 + Sa2 | | 141 | 123 | 146 | 150 | 142 | 168 | 136 | 121 | 137 |
| OTR [cm³ / m²/ day / atm] | | | <2 | <2 | <2 | <2 | <2 | 5 | <2 | <2 | <2 |
| Sensory evaluation | Odor | | 4.3 | 4.3 | 3.8 | 4.3 | 4.5 | 4.8 | 2.3 | 1.5 | 2.0 |
| | Taste | | 4.5 | 4.5 | 3.8 | 4.3 | 4.5 | 4.3 | 2.3 | 1.8 | 2.0 |
| Blocking resistance | | | A | A | A | A | A | A | A | B | A |
| Adhesion strength [N/15 mm] | First skin layer/OPP | | >2.0 | >2.0 | >2.0 | >2.0 | >2.0 | >2.0 | >2.0 | >2.0 | >2.0 |
| | Second skin layer/CPP | | >2.0 | >2.0 | >2.0 | >2.0 | >2.0 | >2.0 | >2.0 | >2.0 | >2.0 |

**[Table 3]**

| | | | Example 11 | Example 12 | Example 13 | Example 14 | Example 15 | Comparative Example 9 | Comparative Example 10 | Comparative Example 11 | Comparative Example 12 |
|---|---|---|---|---|---|---|---|---|---|---|---|
| First skin layer | Resin | | Copolymerized PP (1) | Copolymerized PP (1) | Copolymerized PP (1) | Copolymerized PP (2) | Copolymerized PP (1) | Copolymerized PP (1) | Copolymerized PP (2) | Copolymerized PP (1) | Copolymerized PP (1) |
| | AB agent | Type | Acrylic | Acrylic | Acrylic | Acrylic | Acrylic | Acrylic | Acrylic | Acrylic | Acrylic |
| | | Average particle diameter: [µm] | 2 | 2 | 2 | 2 | 2 | 2 | 2 | 2 | 2 |
| | | Content [mass ppm] | 500 | 500 | 500 | 1500 | 1500 | 500 | 1500 | 500 | 1500 |
| Second skin layer | Resin | | Copolymerized PP (1) | Copolymerized PP (1) | Copolymerized PP (1) | Copolymerized PP (2) | Copolymerized PP (1) | Copolymerized PP (1) | Copolymerized PP (2) | Copolymerized PP (1) | Copolymerized PP (1) |
| | AB agent 1 | Type | Silica | Silica | Silica | Silica | Silica | Silica | Silica | PMMA | PMMA |
| | | Average particle diameter: [µm] | 5 | 2 | 5 | 5 | 4 | 5 | 4 | 4 | 4 |
| | | Content [mass ppm] | 3000 | 3000 | 1500 | 3000 | 3500 | 4500 | 500 | 2000 | 3500 |
| | AB agent 2 | Type | - | PMMA | PMMA | - | - | - | PMMA | - | - |
| | | Average particle diameter: [µm] | - | 2 | 4 | - | - | - | 4 | - | - |
| | | Content [mass ppm] | - | 1000 | 2000 | - | - | - | 2000 | - | - |
| Surface roughness [nm] | Sa1 | | 47 | 47 | 47 | 78 | 78 | 47 | 78 | 47 | 78 |
| | Sa2 | | 93 | 75 | 98 | 93 | 85 | 120 | 79 | 73 | 80 |
| | Sa1 + Sa2 | | 140 | 122 | 145 | 171 | 163 | 167 | 157 | 120 | 158 |
| OTR [cm³ / m² / day / atm] | | | <2 | <2 | <2 | <2 | <2 | 5 | <2 | <2 | <2 |
| Sensory evaluation | Odor | | 4.0 | 4.3 | 3.8 | 4.3 | 4.3 | 4.8 | 2.3 | 1.3 | 1.5 |
| | Taste | | 4.5 | 4.3 | 3.8 | 4.0 | 4.3 | 4.3 | 2.0 | 1.8 | 1.8 |
| Blocking resistance | | | A | A | A | A | A | A | A | B | A |
| Adhesion strength [N/15 mm] | First skin layer/OPP | | >2.0 | >2.0 | >2.0 | >2.0 | >2.0 | >2.0 | >2.0 | >2.0 | >2.0 |
| | Second skin layer/CPP | | >2.0 | >2.0 | >2.0 | >2.0 | >2.0 | >2.0 | >2.0 | >2.0 | >2.0 |

### Reference Signs List

1... Base material film, 2... Anchor coat layer, 3... Vapor-deposited layer, 4... Gas barrier coating layer, 10... Gas barrier film, 11... First skin layer, 12... Core layer, 13... Second skin layer, 20, 30... Laminate, 22... Resin film, 23... Sealant layer, 24... Adhesive layer.

## Claims

1. A gas barrier film comprising a base material film containing polypropylene, and a vapor-deposited layer containing an inorganic oxide disposed on a first surface being one surface of the base material film, wherein
the base material film includes a second skin layer having a second surface being a surface opposite to the first surface of the base material film, and a core layer, and
the second skin layer contains silicon-containing particles in a proportion of 1500 mass ppm or more and 4000 mass ppm or less.

2. The gas barrier film according to claim 1, wherein the second skin layer further contains an anti-blocking agent other than the silicon-containing particles.

3. The gas barrier film according to claim 1, wherein the silicon-containing particles have an average particle diameter of 1 µm or more and 6 µm or less.

4. The gas barrier film according to claim 1, wherein the base material film includes a first skin layer having the first surface.

5. The gas barrier film according to claim 4, wherein
the first skin layer contains a copolymer of propylene and an α-olefin, and
the first surface of the base material film has an arithmetic average height Sa1 of 30 nm or more and 80 nm or less, and the second surface has an arithmetic average height Sa2 of 40 nm or more and 120 nm or less.

6. The gas barrier film according to claim 5, wherein a value of Sa1 + Sa2 is 80 nm or more and 150 nm or less.

7. The gas barrier film according to claim 5, wherein the first skin layer contains an anti-blocking agent.

8. The gas barrier film according to claim 1, wherein the vapor-deposited layer contains aluminum oxide or silicon oxide.

9. The gas barrier film according to claim 1, further comprising a gas barrier coating layer disposed on a surface of the vapor-deposited layer opposite to the base material film.

10. The gas barrier film according to claim 1, further comprising an anchor coat layer disposed between the base material film and the vapor-deposited layer.

11. A laminate comprising the gas barrier film according to any one of claims 1 to 10, and a sealant layer disposed on the second skin layer side of the gas barrier film.

12. The laminate according to claim 11, further comprising a resin film containing polypropylene disposed on a side opposite to the sealant layer of the gas barrier film.

13. A packaging bag obtained by forming the laminate according to claim 11 into a bag.
